(19) Europäisches Patentamt
European Patent Office
Office européen des brevets

(11) Publication number: **0 371 248 A1**

(12) **EUROPEAN PATENT APPLICATION**

(21) Application number: **89119581.0**

(51) Int. Cl.5: **C08G 18/66, C08G 18/65, C08G 18/50**

(22) Date of filing: **21.10.89**

(30) Priority: **03.11.88 US 266725**

(43) Date of publication of application: **06.06.90 Bulletin 90/23**

(84) Designated Contracting States: **BE DE ES FR GB IT NL SE**

(71) Applicant: **MOBAY CORPORATION**
**Patent Department Mobay Road**
**Pittsburgh Pennsylvania 15205-9741(US)**

(72) Inventor: **Slack, William E.**
**R.D. No. 1, Box 100**
**Moundsville, WV 26041(US)**
Inventor: **Kratz, Mark R.**
**P.O. Box 43**
**Hannibal, OH 43931(US)**
Inventor: **Sanders, Josef**
**2331 Norton Road**
**Pittsburgh, PA 15241(US)**
Inventor: **Mafoti, Robson**
**1111 Cochran Road**
**Pittsburgh, PA 15243(US)**

(74) Representative: **Weber, Gerhard, Dr. et al**
**c/o BAYER AG Konzernverwaltung RP**
**Patentabteilung**
**D-5090 Leverkusen 1, Bayerwerk(DE)**

(54) **Polyurea rim systems.**

(57) The present invention is directed to a RIM process utilizing amine chain-extenders and amines of the formula:

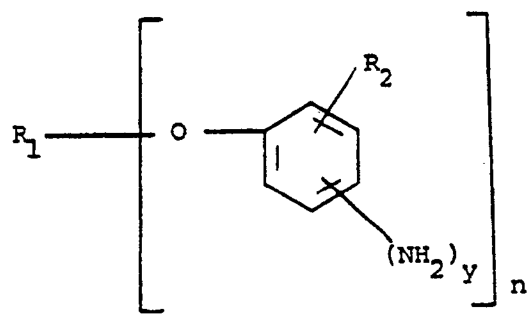

where
$R_1$ is an n-valent group obtained by the removal of hydroxyl groups from an n-hydroxy group containing polyhydroxyl compound having a molecular weight of from about 400 to about 12,000,
$R_2$ represents hydrogen or an inert substituent,
y is 1 or 2, and
n represents an integer from 2 to 8.
Systems of improved flow are obtained.

EP 0 371 248 A1

# POLYUREA RIM SYSTEMS

## Background of the Invention

Reaction injection molded (RIM) polyurethanes are well known in the art and have met with substantial commercial success. U.S. Patent 4,218,543 describes the use of relatively high molecular weight hydroxyl group containing materials, aromatic diamines as chain extenders, and isocyanates for the production of RIM parts.

More recently, the activity in the art has been towards the production of polyurea RIM parts. Typically, these parts are made from relatively high molecular weight polyethers which contain amine groups, diamine chain extenders, and isocyanates. Typical of the materials used and the technologies known in the art are those described in U.S. Patents 4,396,729, 4,433,067, 4,444,910, 4,530,941, 4,774,263 and 4,774,264. As is known in the art, RIM parts are generally produced from two separate streams. One stream generally contains the isocyanate component, while the other stream contains the amine-containing polyether and the amine chain extender. Amine-containing polyethers where the amine groups are attached to aromatic groups are generally too viscous for use in conventional RIM machinery, while amine-containing polyethers where the amine groups are attached to aliphatic moieties are too reactive to be used alone with conventional aromatic isocyanates. One object of the present invention was to provide a mixture of amine-containing reactant and amine chain extender having a substantially reduced viscosity and thus improved flow characteristics. Additionally, this improvement in flow properties would have to be achieved without adversely affecting the physical properties of the final RIM part.

Compounds having terminal aromatic amine groups and having the general structure:

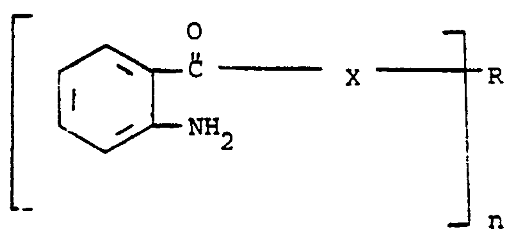

are known. In U.S. Patent 3,808,250, X is defined as oxygen or sulfur, n is an integer of from 2 to 8, and R is defined as an n-valent radical obtained by the removal of hydroxy or mercapto groups from an n-valent polyether or polythioether having a molecular weight of from 600 to 10000. U.S. Patents 3,817,940 and 3,929,863 describe similar compounds where R is based on a polyol or polythiol having a molecular weight of less than 600. U.S. Patents 3,975,428 and 4,016,143 describe similar compounds prepared by reacting isatoic acid anhydride with a compound containing at least two hydroxyl groups and at least one tertiary nitrogen group and having a molecular weight of from about 119 to about 1000. Similar compounds are described in U.S. Patents 4,136,091, 4,169,206, 4,186,257, 4,228,249 and 4,260,557. Para-substituted compounds are described in U.S. Patents 4,504,648 and 4,515,981. Finally, similar para-, meta-and di-meta-substituted compounds are described in U.S. Patents 4,328,322 and 4,732,959. While all of these references describe that the compounds disclosed can be used to manufacture polyurethane products, none describe the use in a polyurea RIM process.

Recently, there have been disclosed poly(aminoaromatic) compounds of the formula:

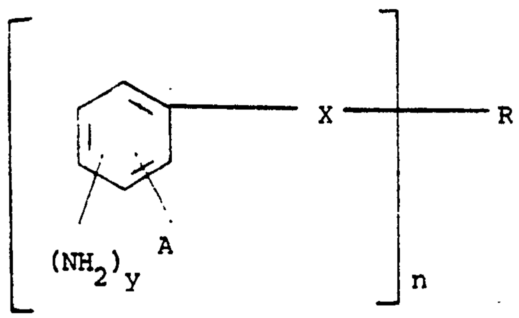

where R is the residue after removal of hydroxyl groups or mercapto groups from a polyol or polythiol of molecular weight of from 400 to 12,000, n is from 2 to 8, X represents oxygen or sulfur, A is hydrogen or an inert substituent, and y is 1 or 2. See European Patent Application 0,268,849, and U.S. Application Serial Number 183,556, filed on April 19, 1988. The application broadly indicates that the amines described therein can be used to prepare polyurethane elastomers. The European application indicates that "[T]ypical of the molded synthetic resins formed by the present compounds are solid cast elastomers, solid and micro-cellular RIM elastomers and elastoplastics." However, in the examples, the European application only describes the use of glycol extenders.

## Description of the Invention

The present invention is directed to a process for making a reaction injection molded elastomer comprising injecting a reaction mixture into a closed mold via a RIM machine with the ratio of components being such that the isocyanate index is from about 70 to about 130. The reaction mixture comprises:

a) an organic di- and/or polyisocyanate,

b) an amine terminated chain extender, and

c) a compound of the formula:

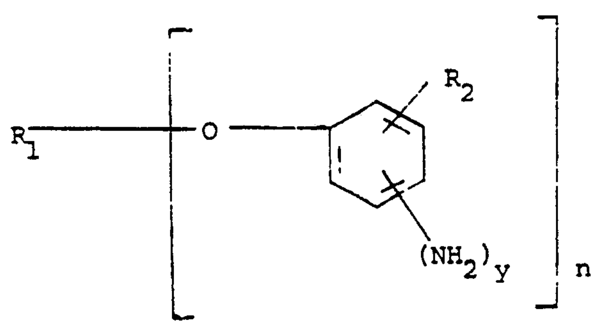

where

$R_1$ is an n-valent group obtained by the removal of hydroxyl groups from an n-hydroxy group containing polyhydroxyl compound having a molecular weight of from about 400 to about 12,000,

$R_2$ represents hydrogen or an inert substituent,

y is 1 or 2, and

n represents an integer from 2 to 8.

The systems process very well primarily due to the relatively low viscosity of component c). Upon demold, the resultant product has excellent tear strength and releases from the mold readily. The molded parts exhibit no streaking, good green strength and are stiff and tough at demold.

The present invention is also directed to an isocyanate-reactive mixture comprising the compound c) and the amine terminated chain extender b).

The compounds c) useful herein are prepared by first reacting an n-valent polyhydroxyl compound with a nitro halogen benzene to form the corresponding nitrophenoxy adduct, and thereafter hydrogenating the adduct to form the corresponding amino phenoxy product.

The polyhydroxyl compounds used to produce component c) are preferably high molecular weight

compounds having an average molecular weight of 400 to about 12,000 in particular 400 to about 6000 containing 2 to 8, preferably 2 to 4 reactive hydroxyl groups. Suitable examples include the hydroxyl group-containing compounds conventionally used in polyurethane chemistry such as hydroxyl-containing polyacetals, polythioethers, polycarbonates, polyamides, polysiloxanes and/or polybutadienes, polyesters, polyacetones and polyethers. Among these, polyethers containing hydroxyl groups are particularly preferred.

The hydroxyl polyethers suitable for the process according to the invention are known and may be prepared, for example, by the polymerization of epoxides such as ethylene oxide, propylene oxide, butylene oxide, tetrahydrofuran, styrene oxide or epichlorohydrin on their own, e.g. in the presence of $BF_3$, or by chemical addition of these epoxides, optionally as mixtures or successively, to starting components containing reactive hydrogen atoms such as water, alcohols or amines. Examples include ethylene glycol, propylene glycol-(1,3) or -(1,2), trimethylol propane 4,4′-dihydroxydiphenyl propane, aniline, ammonia, ethanolamine or ethylene diamine. Sucrose polyethers of the type described, for example, in German Auslegeschriften 1,176,358 and 1,064,938 may also be used according to the invention. It is frequently preferred to use polyethers which contain predominantly primary OH groups (up to about 90% by weight, based on all of the OH groups in the polyether). Polyethers modified by vinyl polymers of the kind obtained, for example, by the polymerization of styrene and acrylonitrile in the presence of polyethers (U.S. Patents 3,383,351, 3,304,273, 3,523,093 and 3,110,695 and German Patent 1,152,536) are also suitable, as are polybutadienes containing OH groups.

Suitable polyacetals include the compounds obtained from formaldehyde and glycols such as di- or triethylene glycol, 4,4′-dioxethoxy-diphenyl-dimethyl-methane (bisphenol A + 2 mol ethylene oxide) and hexane diol or by the polymerization of cyclic acetals, such as trioxane.

Suitable polycarbonates containing hydroxyl groups are known and include those prepared by the reaction of diols such as propane-1,3-diol, butane-1,-4-diol, hexane-1,6-diol, di-, tri- or tetraethylene glycol or thiodiglycol with phosgene or diaryl-carbonates, e.g. diphenylcarbonate (DE-B 1,694,080, 1,915,908 and 2,221,751; DE-A 2,605,024).

The polyesters of dicarboxylic acids and diols may be those obtained from adipic acid and isophthalic acid and straight chained and/or branched diols as well as lactone polyesters, preferably those based on caprolactone and starter diols.

Particularly important among the polythioethers are the condensation products obtained by reacting thiodiglycol on its own and/or with other glycols.

Polyhydroxyl compounds already containing urethane or urea groups and modified or unmodified natural polyols may also be used. Products of addition of alkylene oxides to phenolformaldehyde resins or to ureaformaldehyde resins may also be used according to the invention. Furthermore, amide groups may be introduced into the polyhydroxyl compounds as described e.g., in DE-A 2,559,372.

Polyhydroxyl compounds in which high molecular weight polyadducts or polycondensates or polymers are present in a finely dispersed or dissolved form may also be used according to the invention. Polyhydroxyl compounds of this type may be obtained, for example, by carrying out polyaddition reactions (e.g. reactions between polyisocyanates and amino functional compounds) or polycondensation reactions (e.g. between formaldehyde and phenols and/or amines) in situ in the above mentioned compounds containing hydroxyl groups. Processes of this type are described, for example, in DE-B 1,168,075 and 1,260,142 and DE-A 2,324,134, 2,423,984, 2,512,385, 2,513,815, 2,550,796, 2,550,797, 2,550,833, 2,550,862, 2,633,293 and 2,639,254. The required compounds may also be obtained according to US-PS 3,869,413 or 2,550,860 by mixing a previously prepared aqueous polymer dispersion with a polyhydroxyl compound and then removing water from the mixture.

Polyhydroxyl compounds modified with vinyl polymers such as those obtained, for example, by the polymerization of styrene and acrylonitrile in the presence of polycarbonate polyols (DE-PS 1,769,795, US-PS 3,637,909) are also suitable for the process according to the invention. Synthetic resins with exceptional flame resistance may be obtained by using polyether polyols which have been modified by graft polymerization with vinyl phosphonic acid esters and optionally (meth)acrylonitrile, (meth)acrylamide or OH-functional (meth)acrylic acid esters according to DE-A 2,442,101, 2,644,922 and 2,646,141.

When modified polyhydroxyl compounds of the type mentioned above are used as starting materials for the polyamines, the resulting starting components used in the polyisocyanate polyaddition processes in many cases result in polyurethanes which have substantially improved mechanical properties.

Suitable, although less preferred, polyhydroxyl components also include the organofunctional polysiloxanes containing two terminal isocyanate-reactive groups and structural units of the formula $-O-Si(R)_2$ in which R denotes a $C_1$-$C_4$ alkyl group or a phenyl group, preferably a methyl group. Both the known, pure poly-siloxanes containing organofunctional end groups and the known siloxane polyoxyalkylene copolymers

containing organofunctional end groups are suitable starting materials according to the invention. Preferred organopolysiloxanes correspond to the general formula

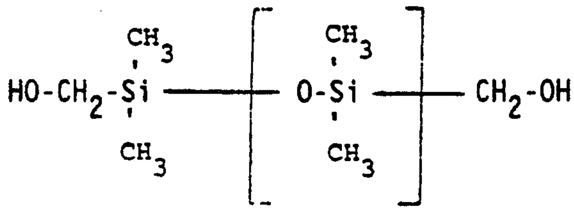

n = 5 to 29

They are prepared in known manner by the equilibration of 1,1,3,3-tetramethyl-1,3-hydroxymethyl-disiloxane of the formula

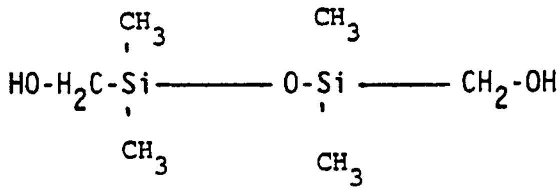

with octamethylene cyclotetrasiloxane in the presence of sulfuric acid or by the process according to DE-B 1,236,505.

Starting materials for producing the amino compound c) include halogenated nitrobenzenes optionally substituted with inert substituents represented by the formula

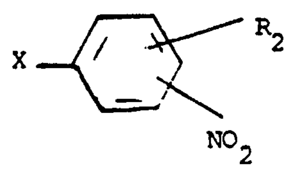

wherein

$R_2$ stands for hydrogen or an inert substituent, preferably hydrogen, and

X stands for a halogen, such as fluorine or preferably chlorine

and wherein the halogen substituents and nitro substituents are preferably in the ortho or para position to one another. By "inert substituent" is meant any substituent that does not react with an amine, nitro, hydroxyl or isocyanate group, and includes lower alkyl of from 1 to 8 carbon atoms such as methyl, ethyl, propyl, butyl and the like; $C_8$ to $C_{12}$ aryl groups, $C_7$ to $C_{10}$ aralkyl groups, $C_4$ to $C_6$ cycloalkyl groups; and $C_1$ to $C_8$ alkoxy groups.

Examples of suitable compounds of this type include 2-nitrochlorobenzene, 2-nitrofluorobenzene, 4-nitrochlorobenzene, 4-nitrofluorobenzene, 1-methyl-2-nitro-3-chlorobenzene, 1-methyl-2-nitro-3-fluoro- benzene, 1-methyl-4-nitro-5-chlorobenzene, 1-methyl-4-nitro-5-fluorobenzene, 1-methyl-2-nitro-6-chlorobenzene and 1-methyl-2-nitro-6-fluorobenzene. 2-nitro-chlorobenzene and 4-nitro-chlorobenzene are particularly preferred starting materials.

Examples of compounds which are alkaline in reaction as required for the reaction of polyhydroxyl compounds with the halogenated nitrobenzenes include metal hydrides, metal alkoxides and, preferably, metal hydroxides. Sodium hydroxide and potassium hydroxide are particularly preferred.

In the first step, the halogenated benzene may be used in stoichiometric quantity, in excess or in subsequent quantity with respect to the polyol. The quantity of halogenated benzene is preferably calculated to provide about 1 to 1.5 mol of halogenated benzene for each equivalent of hydroxyl groups of polyol. The hydrogen halide released in the reaction are bound by the addition of metal hydrides, metal alkoxides or metal hydroxides as mentioned above. They are used in at least sufficient quantity to ensure neutralization of the hydrogen halide split off. They are most preferably used in the quantity required to provide from 1 to 3 mol of base per equivalent hydroxyl groups.

The first step may be carried out solvent free or in the presence of an organic solvent, optionally in the

presence of a phase transfer catalyst. The components for the reaction may be present in a homogeneous phase or diphasic, i.e., as solutions, emulsions or suspensions.

Examples of suitable organic solvents include benzene, toluene, xylene, chlorobenzene, dichlorobenzene, trichlorobenzene, diethylether, diisopropyl-ether, tert.-butylmethylether, tetrahydrofuran, dioxane, ethylene glycol dimethylether, ethyl acetate, acetone, methylethylketone, acetonitrile, furfural, methylene chloride, chloroform, trichloroethylene, tetrachloro-ethylene, nitromethane and nitropropane. Polar aprotic solvents are preferred and include dimethylformamide, dimethylacetamide, N-methylpyrrolidone, tetramethyl urea. N-methylcaprolactam, dimethyl sulfoxide, tetramethylene sulphone, hexamethylene phosphoric acid triamide, etc. Dimethylformamide, dimethyl sulfoxide and N-methyl pyrrolidone are particularly preferred. Mixtures of such solvents may, of course, also be used.

The quantity of solvent used is generally calculated to be sufficient to form a clear solution of the starting materials. In practice, this means that the solvents are generally used in a quantity of about 50 to 1,000, preferably about 100 to 500 parts by weight of solvent per 100 parts by weight of the mixture of the starting materials.

It may in some cases be advantageous to carry out the reaction in the presence of a phase transfer catalyst. Catalysts of this type are described, for example, by E.V. and S.S. Dehmlow in Phase Transfer Catalysis, Second Edition, Verlag Chemie 1983. Suitable catalysts include the quaternary ammonium and phosphonium salts of the formula

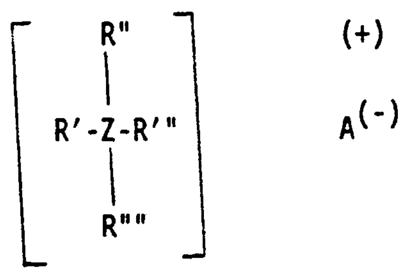

wherein

Z denotes nitrogen or phosphorous and,

$R'$, $R''$, $R'''$, and $R''''$ may be identical or different and denote alkyl groups with 1 to 18 carbon atoms wherein one of the groups may be an araliphatic group with 7 to 15 carbon atoms, and the sum of carbon atoms in the four groups is preferably 12 to 31.

Typical amines of suitable catalysts include N-benzyl-N,N,N-triethyl-ammonium chloride or bromide, N-benzyl-N-dodecyl-N,N-dimethyl-ammonia chloride or bromide, N,N,N,N-tetra-n-hexyl-ammonium chloride or bromide. N-benzyl-N,N,N-tri-n-octyl-ammonium chloride or bromide and the phosphonium salts corresponding to these ammonium salts.

The quaternary ammonium and phosphonium salts mentioned as examples are preferably used solvents free or in the form of their aqueous solutions (for example with a solids content of about 30 to 60% by weight) and preferably in a quantity of about 1 to 10 mol %, based on the equivalents of hydroxyl groups present.

When polar aprotic solvents such as dimethyl-formamide, N-methyl pyrrolidone or dimethyl sulfoxide are used, as is preferred for the process according to the invention, there is no disadvantage in omitting the use of phase transfer catalysts.

The first step of the process of preparing the amines is generally carried out at about 10 to 100° C, preferably about 20 to 60° C, with excess pressure, reduced pressure or preferably ambient pressure, and either continuously or batchwise. The reaction time is generally about 0.5 to 24 hours, preferably about 0.5 to 8 hours.

The final step of the process of preparing the amines may be carried out, for example, by introducing the starting materials and optionally the phase transfer catalyst into the reaction vessel in the selected solvent and adding the base in the form of a solution or suspension or, preferably, in a solid, very finely ground form, either portion-wise or continuously with stirring and optionally with cooling. Stirring is then continued at room temperature or optionally at elevated temperature until complete conversion of the hydroxyl groups initially present is determined by IR-spectroscopy and/or no halogenated benzene can be detected by thin layer or gas chromatography.

The resultant nitrophenoxy adducts are worked up in known manner, suitably by diluting the reaction mixture with a water immiscible inert solvent, washing with water or salt solution until neutral, distilling off

the solvent (optionally under vacuum) and drying the product under vacuum.

Neutralization of the reaction mixtures may also be carried out by treating it with $CO_2$. The inert solvents used include toluene, methylene chloride, chlorobenzene, dichlorobenzene, 1,2-dichloroethane, trichloroethylene, etc. The crude product obtained may generally be worked up without further purification but if it still contains small quantities of halogenated benzene due to incomplete conversion, this may be removed by sublimation in a high vacuum or advantageously by thin layer distillation.

It is possible in principle but is less preferred to transfer the reaction mixture obtained from the first step directly to the second step without first isolating it and optionally first neutralizing the excess alkali metal hydroxide.

The compounds containing nitrophenoxy end groups obtained in the first step are converted into the corresponding polyamines in known manner by reduction with nascent or catalytic hydrogen, for example hydrogen which has been activated with Raney nickel or with palladium or charcoal. This hydrogenation may be carried out in the presence or absence of inert solvents, at about 20 to 120 °C and under a pressure of about 20 to 80 bar. Suitable solvents include methanol, ethanol, i-propanol, toluene and DMF, among others. Methanol is preferred. The diamines are obtained as distillation residue from the distillative removal of solvent and may be used for production of polyurethane resins without further purification.

The polyamines obtained from working up the reaction mixture are generally products with a brownish color and are distinguished from previously known aromatic aminopolyethers by their substantially lower viscosity. Apart from the functional groups already present in the polyhydroxyl compounds from which they have been obtained, e.g. ether groups, thioether groups, dialkyl siloxane, carbonate groups and/or polybutadiene groups, they only contain ether groups corresponding in number to their functionality.

Further details as to the production of the amines herein can be found in European Patent Application 0,268,849, and in U.S. Patent Application Serial Number 183,556 filed on April 19, 1988, the disclosures of which are herein incorporated by reference.

The isocyanate (component a)) used in the process of the present invention is preferably an aromatic diisocyanate and/or polyisocyanate, i.e., a polyisocyanate in which all of the isocyanate groups are aromatically bound. Examples of such compounds include 2,4- and/or 2,6-diisocyanatotoluene; 2,2′-, 2,4′- and/or 4,4′-diisocyanatodiphenyl methane, mixtures of the last-mentioned isomers with their higher homologues (such as are obtained from the known reaction of the phosgenation of aniline/formaldehyde condensates); compounds containing urethane groups obtained as products of reaction of the above-mentioned di- and/or polyisocyanates with subequivalent quantities of polyhydroxyl compounds having molecular weights of from 62 to 10,000, (e.g., ethylene glycol, trimethylol propane, propylene glycol, dipropylene glycol or polypropylene glycols, and polyester glycols within the above-mentioned molecular weight range); di- and/or polyisocyanates modified by the partial carbodiimidization of the isocyanate groups of the above-mentioned di- and/or polyisocyanates; methyl-substituted diisocyanates of the diphenyl methane series or mixtures thereof (for example, those described in European Specification No. 0,024,665); or mixtures of such aromatic di- and polyisocyanates.

Included among the preferred isocyanates are the derivatives of 4,4′-diisocyanatodiphenyl methane which are liquid at room temperature. Specific examples of such compounds are polyisocyanates containing urethane groups obtainable according to German Patent 1,618,380 (U.S. 3,644,457) by reacting 1 mol of 4,4′-diisocyanatodiphenyl methane with from 0.05-0.3 mol of low molecular weight diols or triols, (preferably polypropylene glycols having molecular weights below 700); diisocyanates based on 4,4′-diisocyanatodiphenyl methane containing carbodiimide and/or uretoneimine groups, such as those disclosed in U.S. Patents 3,152,162; 3,384,653 and 3,449,256, German Offenlegungsschrift No. 2,537,685 and European Specification No. 5233 (U.S. Serial No. 903,308). Also included among the preferred polyisocyanates are the corresponding modified products based on mixtures of 2,4′- and 4,4′-diisocyanatodiphenyl methane or mixtures of the above-described modified 4,4′-diisocyanato-diphenylmethanes with minor quantities of higher than difunctional polyisocyanates of the diphenyl methane series. Such polyisocyanates are described in German Offenlegungsschrift 2,624,526. The preferred polyisocyanate mixtures of the diphenyl methane series are liquid at room temperature and have optionally been chemically modified as described above, with an average isocyanate functionality of from 2 to 2.8 (preferably from 2.1 to 2.7) containing 4,4′-diisocyanatodiphenyl methane as the main component (amounting to more than 40 wt. %).

The diamines used as component b) in the process of the present invention generally have molecular weights of from 108 to 400 and preferably contain exclusively aromatically bound primary or secondary (preferably primary) amino groups. Examples of such diamines are: 1,4-diaminobenzene, 2,4-diaminotoluene, 2,4- and/or 4,4′-diaminodiphenyl methane, 3,3′-dimethyl-4,4′-diaminodiphenyl methane, 4,4′-diaminodiphenyl-propane-(2,2), mixtures of such diamines, and the like.

The preferred diamines have alkyl substituents in at least one position which is ortho to the amino groups. The most preferred diamines are those in which at least one alkyl substituent is present in the position ortho to the first amino group and two alkyl substituents are located in the position ortho to the second amino group, each alkyl substituent having 1 to 4 carbon atoms. It is particularly preferred to use such compounds in which an ethyl, n-propyl, isopropyl, t-butyl and/or methylthio substituent is present in at least one position ortho to the amino groups and possibly methyl substituents in other positions ortho to the amino groups.

Specific examples of preferred amines include 2,4-diaminomesitylene, 1,3,5-triethyl-2,4-diaminobenzene, 1,3,5-triisopropyl-2,4-diaminobenzene, 1-methyl-3,5-diethyl-2,4-diaminobenzene, 1-methyl-3,5-diethyldiaminobenzene, 4,6-dimethyl-2-ethyl-1,3-diaminobenzene, 3,5,3′,5′-tetraethyl-4,4′-diaminodiphenyl methane, 3,5,3′5′-tetraisopropyl-4,4′-diaminodiphenyl methane, 3,5-diethyl-3,5′-diisopropyl-4,4-diaminodiphenyl methane, t-butyl toluenediamine and bis-thiomethyl toluene diamine. Also useful are adducts of these aminos with epoxy resins. It is also within the scope of this invention to use aliphatic amine chain extender materials as described in U.S. Patents 4,246,363, 4,269,945, 4,495,081 and 4,530,941, although the aliphatic amines are not preferred.

The above-mentioned diamines may, of course, also be used as mixtures. It is particularly preferred to use 1-methyl-3,5-diethyl-2,4-diamino-benzene or a mixture of this compound with 1-methyl-3,5-diethyl-2,6-diaminobenzene.

The diamine chain lengthening agent (component b)) in the process of the present invention is preferably used in quantities of from 5 to 50 wt. %, most preferably from 10 to 40 wt. % (based on the weight of component c)).

Known mold release agents may be used to produce molded articles which have excellent mold release characteristics. Such internal mold release agents are among the auxiliary agents which may advantageously be used in the process of the present invention. In principle, any mold release agent known in the art may be used in the present invention but internal mold release agents such as those described, for example, in German Offenlegungsschrift No. 1,953,637 (U.S. 3,726,952), German Offenlegungsschrift 2,121,670 (British Patent 1,365,215), German Offenlegungsschrift 2,431,968 (U.S. 4,098,731), German Offenlegungsschrift 2,404,310 (U.S. 4,058,492) and U.S. Patents 4,519,965 and 4,581,386 are preferred. Preferred mold release agents include the salts (containing at least 25 aliphatic carbon atoms) of fatty acids having at least 12 aliphatic carbon atoms and primary mono-, di- or polyamines containing two or more carbon atoms or amines containing amide or ester groups and having at least one primary, secondary or tertiary amino group; esters of mono-and/or polyfunctional carboxylic acids and polyfunctional alcohols containing saturated and/or unsaturated COOH and/or OH groups and having hydroxyl or acid numbers of at least five, ester type reaction products of ricinoleic acid and long chained fatty acids; salts of carboxylic acids and tertiary amines; and natural and/or synthetic oils, fats or waxes. Also preferred are the zinc salts described in U.S. 4,519,965 and 4,581,386.

The oleic acid or tall oil fatty acid salts of the amine containing amide groups which has been obtained by the reaction of N-dimethylaminopropylamine with oleic acid or tall oil fatty acid is particularly preferred.

Apart from the above-described preferred mold release agents, other mold release agents known in the art may in principle be used either alone or in a mixture with the preferred mold release agents. These additional mold release agents include, for example, the reaction products of fatty acid esters with polyisocyanates (according to German Offenlegungsschrift 2,319,648); the reaction products of polysiloxanes containing reactive hydrogen atoms with mono-and/or polyisocyanates (according to German Offenlegungsschrift 2,356,692 (U.S. 4,033,912); esters of mono- and/or polycarboxylic acids and polysiloxanes containing hydroxyl groups (according to German Offenlegungsschrift 2,363,452 (U.S. 4,024,090)); and salts of polysiloxanes containing amino groups and fatty acids (according to German Offenlegungsschrift 2,417,273 or German Offenlegungsschrift 2,431,968 (U.S. 4,098,731)).

If an internal mold release agent is used, it is generally used in an amount which totals from 0.1 to 25 wt. %, preferably 1 to 10 wt. % of the whole reaction mixture.

No catalyst is required for the reaction between isocyanate groups and isocyanate reactive groups of the components b) and c). However, catalysts known and commonly used in the production of polyurethane foams and microcellular elastomers are included in the group of auxiliary agents and additives appropriate to the present invention.

Suitable catalysts include tertiary amines such as triethylamine, tributylamine, N-methyl-morpholine, N-ethyl-morpholine, N-cocomorpholine, N,N,N′,N′-tetra methylethylene diamine, 1,4-diazabicyclo-(2,2,2)-octane, N-methyl-N′-dimethylaminoethyl piperazine, N,N-dimethylbenzylamine, bis-(N,N-diethylamino)-adipate, N,N-diethyl benzylamine, pentamethyl diethylene triamine, N,N-dimethylcyclohexylamine, N,N,N′,N′-tetramethyl-1,3-butanediamine, 1,2-dimethylimidazole and 2-methyl-imidazole.

Organometallic catalysts may also be used in the practice of the present invention. Particularly useful organometallic catalysts include organic tin catalysts such as tin(II) salts of carboxylic acids (e.g., tin-(II)-acetate, tin-(II)-laurate) and the dialkyl tin salts of carboxylic acids (e.g., dibutyl-tin-diacetate, dibutyl-tin-dilaurate, dibutyl-tin-maleate or dioctyl-tin-diacetate) alone or in combination with tertiary amines. Other suitable catalysts and details concerning the action of these catalysts are given in Kunststoff Handbuch, Volume VII, published by Vieweg and Hochtlen, Carl Hanser Verlag, Munich 1966, e.g., on pages 96 to 102.

If a catalyst is used, quantities of about 0.001 to 10 wt. %, preferably 0.05 to 1 wt. % (based on component c)) are appropriate.

The products of the process of the present invention are preferably molded elastomeric articles. Blowing agents may be used to produce molded articles having a compact surface and a cellular interior. The blowing agents used may be water and/or readily volatile organic substances and/or dissolved inert gases.

Examples of suitable organic blowing agents include acetone; ethylacetate; methanol; ethanol; halogen-substituted alkanes such as methylene chloride, chloroform, ethylidene chloride, vinylidene chloride, monofluorotrichloromethane, chlorodifluoromethane and dichlorofluoromethane; and butane, hexane, heptane or diethyl ether.

Nitrogen, air and carbon dioxide are examples of suitable inert gases.

The effect of a blowing agent may also be obtained by the addition of compounds which decompose at temperatures above room temperature to release gases, for example nitrogen. Azo compounds such as azoisobutyric acid nitrile are examples of such compounds. Other examples of blowing agents and details concerning the use of blowing agents may be found in Kunststoff Handbuch, Volume VII, published by Vieweg and Hochtlen, Carl Hanser Verlag, Munich 1966, e.g., on pages 108 and 109, 453 to 455 and 507 to 510.

In accordance with the present invention, surface active additives (emulsifiers and foam stabilizers) may also be used as reaction mixture components. Suitable emulsifiers include the sodium salts of ricinoleic sulfonates or of fatty acids or salts of fatty acids and amines (such as oleic acid diethylamine or stearic acid diethanolamine). Alkali metal or ammonium salts of sulfonic acids (e.g., of dodecyl benzene sulfonic acid or of dinaphthyl methane disulfonic acid) or of fatty acids such as ricinoleic acid or polymeric fatty acids may also be used as surface active additives.

If foam stabilizers are used, it is preferred that they be water soluble polyether siloxanes. These compounds are generally a copolymer of ethylene oxide and propylene oxide linked to a polydimethyl siloxane group. Foam stabilizers of this type are described in U.S. 2,764,565.

Other auxiliary agents and additives which may optionally be used in the process of the present invention include known cell regulators (such as paraffins or fatty alcohols or dimethyl polysiloxanes), known pigments, dyes and flame retarding agents (e.g., tris-chloroethyl phosphate and polyphosphate), stabilizers against aging and weathering, plasticizers, fungistatic and bacteriostatic substances, and fillers (such as barium sulfate, glass fibers, kieselgur or whiting).

Other examples of suitable surface active additives and foam stabilizers, flame retardants, plasticizers, dyes, fillers and fungistatic and bacteriostatic substances and details concerning the use of mode of action of these additives may be found in Kunststoff Handbuch, Volume VII, published by Vieweg and Hochtlen, Carl Hanser Verlag, Munich 1966, e.g., on pages 103 to 113.

When carrying out the process of the present invention, the quantity of polyisocyanates (component a)) should preferably be such that the isocyanate index is from 70 to 130, most preferably 90 to 110 in the reaction mixture.

The process of the present invention is carried out by the known reaction injection molding technique (RIM process). Two streams are generally employed in this molding technique. In the present invention, the polyisocyanate (component a)) is the first reactant and the "polyamine component" (i.e., the mixture of component c), and the diamine component c)), is the second reactant. If any auxiliary agents or additives are used, they are generally mixed with the "polyamine component". However, it may be advantageous, for example when using a mold release agent containing isocyanate groups, to incorporate the release agent with the reactant polyisocyanate (component a)) before the process of the present invention is carried out. It is possible in principle to use mix heads in which three or four separate components may be simultaneously introduced so that no preliminary mixing of the individual components is required. The quantity of reaction mixture introduced into the mold is generally calculated to produce molded articles having densities of from 0.8 to 1.4 g/cm$^3$, preferably from 0.9 to 1.2 g/cm$^3$. When mineral fillers are used, however, the molded articles may have densities above 1.2 g/cm$^3$. The articles may be removed from the mold after they have been left in there from 5 to 90 seconds, preferably from 20 to 60 seconds.

The reactant mixture is generally introduced into the mold at a starting temperature of from 10 to 60° C,

preferably from 20 to 50 °C. The temperature of the mold itself is generally from 40 to 100 °C, preferably from 50 to 70 °C.

The molded articles obtainable by the process of the present invention are particularly suitable for the manufacture of flexible automobile bumpers or car body parts.

The invention is further illustrated but is not intended to be limited by the following examples in which all parts and percentages are by weight unless otherwise specified.

## EXAMPLES

In the examples, the following materials were used:

POLYAMINE A: prepared by hydrolyzing a prepolymer formed from toluene diisocyanate and a 4800 molecular weight glycerine/propylene oxide/ethylene oxide polyether (having 17% by weight ethylene oxide termination); the hydrolyzed product has an amine number of 30.3.

POLYAMINE B: prepared by hydrogenating the reaction product of ortho-chloronitrobenzene, sodium hydroxide, and a 4800 molecular weight glycerine/propylene oxide/ethylene oxide polyether (having 17% by weight ethylene oxide termination); the hydrogenated product has an amine number of 31.8.

POLYAMINE C: prepared by hydrogenating the reaction product of para-chloronitrobenzene, sodium hydroxide and the same polyether used to produce POLYAMINE B; the hydrogenated product has an amine number of 29.2.

DETDA: diethyl toluene diamine.

M-4050: a propylene oxide/ethylene diamine adduct having an OH number of 630.

DB OIL: a castor oil available from Cas Chem.

Zn: zinc stearate.

L-5304: a silicone surfactant available from Union Carbide.

ISO: the isocyanate used was a blend of (i) 20 parts by weight of a polymethylene poly(phenylisocyanate) having an isocyanate content of 32.5%, with a 19% by weight of 2,4′-isomer content, and an isocyanate functionality of about 2.4, and (ii) 80 parts by weight of a 19% isocyanate content prepolymer prepared by reacting a blend of a) 56 parts of 4,4′-methylene bis(phenylisocyanate) and b) 6 parts by weight of a carbodiimide-group modified 4,4′-methylene bis(phenylisocyanate) having an NCO content of 29.3%, with c) a 2000 molecular weight polyester diol (based on adipic acid, 1,4-butane diol and ethylene glycol). The blend had an NCO content of about 21.6% by weight.

### Examples 1 through 3

RIM plaques were prepared using a laboratory piston metering unit and a clamping unit. The metering unit was a two component instrument having a maximum metering capacity of 0.6 liters. A rectangular mold, 300 mm x 200 mm x 3 mm was used to mold the samples under the following conditions:

| | |
|---|---|
| Component A temperature (iso) | 40 °C |
| Component B temperature | 60 °C |
| Isocyanate Index | 105 |
| Mold temperature | 65 °C |
| Mix pressure | 18.5 N/mm² |
| Demold time | 45 sec |

The formulations used and the physical properties were as indicated in the following table. The samples were tested for density (ASTM D-792), flex modulus (ASTM D-638), elongation (ASTM D-638), heat sag (ASTM D-3769), notched Izod (ASTM D-256), and tear strength-die "C" (ASTM D-624). Example 1 is a comparative example.

TABLE

| | 1 | 2 | 3 |
|---|---|---|---|
| B-SIDE | | | |
| POLYAMINE A | 65.75 | - | - |
| POLYAMINE B | - | 65.75 | - |
| POLYAMINE C | - | - | 65.75 |
| M-4050 | 3 | 3 | 3 |
| DETDA | 26 | 26 | 26 |
| Zn | 2.5 | 2.5 | 2.5 |
| DN OIL | 2 | 2 | 2 |
| L-5304 | 0.75 | 0.75 | 0.75 |
| A-SIDE | | | |
| ISO | 76.7 | 77.1 | 76.5 |
| RESULTS | | | |
| Density, g/cm³ | 1.13 | 1.14 | 1.13 |
| Flex Mod, N/mm² | 580 | 577 | 557 |
| Elongation, % | 160 | 135 | 180 |
| Tear Strength, N/mm | 89 | 83 | 105 |
| Izod, N-mm/mm | 361 | 275 | 345 |
| Heat Sag | | | |
| 10 cm 163° C | 7.8 | 5.3 | 10.3 |
| 15 cm 135° C | 6.8 | 5.3 | 10.3 |

Streaking was observed for the molded part of Example 1, while no streaking was observed for either Example 2 or Example 3.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A process for the preparation of a reaction injection molded elastomer comprising injecting a reaction mixture into a closed mold via a RIM machine, with the ratio of components being such that the isocyanate index is from about 70 to about 130, said reaction mixture comprising

(a) via organic di- and/or polyisocyanate,

(b) an amine terminated chain extender, and

(c) a compound of the formula:

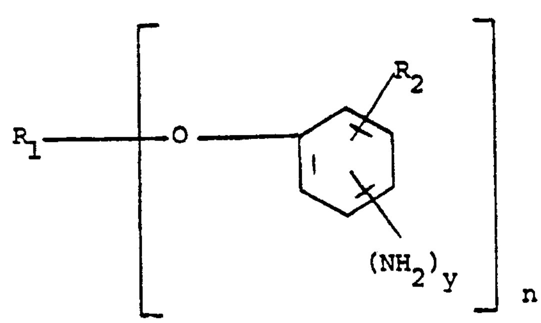

where
$R_1$ is an n-valent group obtained by the removal of hydroxyl groups from an n-hydroxy group containing polyhydroxyl compound having a molecular weight of from about 400 to about 12,000,
$R_2$ represents hydrogen or an inert substituent,
y is 1 or 2, and
n represents an integer from 2 to 8.

2. The process of Claim 1 where $R_1$ is an n-valent group obtained by the removal of hydroxyl groups from an n-hydroxyl group-containing polyether having a molecular weight of from about 400 to about 12,000.

3. The process of Claim 1 wherein n is an integer of from 2 to 4.

4. The process of Claim 1 wherein $R_2$ is hydrogen.

5. The process of Claim 1 wherein said component (b) is 1-methyl-3,5-diethyl-2,4- and/or -2,6-diaminobenzene.

6. The process of Claim 1 wherein said reaction mixture also includes a release agent.

7. An isocyanate reactive composition comprising
(a) an amine terminated chain extender, and
(b) a compound of the formula

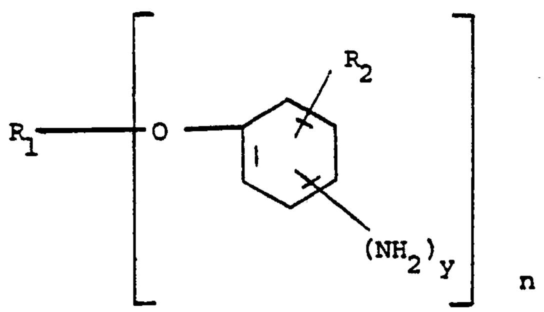

where
$R_1$ is an n-valent group obtained by the removal of hydroxyl groups from an n-hydroxy group containing polyhydroxyl compound having a molecular weight of from about 400 to about 12,000,
$R_2$ represents hydrogen or an inert substituent,
y is 1 or 2, and
n represents an integer from 2 to 8.

8. The composition of Claim 7 where $R_1$ is an n-valent group obtained by the removal of hydroxyl groups from an n-hydroxyl group-containing polyether having a molecular weight of from about 400 to about 12,000.

9. The composition of Claim 7 wherein n is an integer of from 2 to 4.

10. The composition of Claim 7 wherein component (a) is an aromatic amine.

European Patent Office

# EUROPEAN SEARCH REPORT

Application Number

EP 89 11 9581

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | EP-A-0 268 849 (DOW)<br>* Claims 1,2,9; page 5, line 17 - page 6, line 42 *<br>--- | 1-10 | C 08 G 18/66<br>C 08 G 18/65<br>C 08 G 18/50 |
| Y | EP-A-0 288 825 (BAYER)<br>* Claims 1-4,9; page 7, lines 2-26 *<br>--- | 1-10 | |
| Y | EP-A-0 093 862 (TEXACO)<br>* Claims 1-5; page 2, lines 23-27 * & US-A-4 433 067 and US-A-4 444 910 (Cat. D)<br>----- | 1-10 | |
| | | | **TECHNICAL FIELDS SEARCHED (Int. Cl.5)** |
| | | | C 08 G |

The present search report has been drawn up for all claims

| Place of search | Date of completion of the search | Examiner |
|---|---|---|
| THE HAGUE | 02-03-1990 | VAN PUYMBROECK M.A. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document